# EUROPÄISCHE PATENTSCHRIFT

(11) **EP 0 567 720 B1**
(45) Veröffentlichungstag und Bekanntmachung des Hinweises auf die Patenterteilung: **13.09.1995**
(21) Anmeldenummer: 93100432.9
(22) Anmeldetag: 14.01.1993
(51) Int. Cl.: B60D 1/14, A01B 59/043, F16C 11/02, F16C 11/04, F16B 21/12

(54) **Steckbolzenverbindung**
Coupling with socket pin
Liaison à axe débrochable

(30) Priorität: 29.04.1992 DE 9205757 U
(43) Veröffentlichungstag der Anmeldung: 03.11.1993
(73) Patentinhaber: Rabewerk GmbH + Co., 49152 Bad Essen (DE)
(72) Erfinder: Buhl, Manfred, Dipl.-Ing., W-4500 Osnabrück (DE)
(74) Vertreter: Missling, Arne, Dipl.-Ing.

(56) Entgegenhaltungen:
- DE-U- 6 943 625

## Beschreibung

Die Erfindung betrifft eine Steckbolzenverbindung für die Verbindung eines Maschinenteiles, beispielsweise des Anbaubockes eines landwirtschaftlichen Anbaugerätes, mit einem kraftübertragenden Bauelement, beispielsweise dem Oberlenker eines Dreipunktgestänges bei Ackerschleppern, mit einem Steckbolzen, der in einer Bohrung des kraftübertragenden Baulementes sowie in mindestens einer Ausnehmung des damit verbundenen Maschinenteiles angeordnet ist, und mit einem Halteteil, das mit dem Steckbolzen starr verbunden und an dem Maschinenteil so arretiert ist, daß der Steckbolzen im belasteten Zustand nicht verdrehbar ist.

Eine solche Steckbolzenverbindung ist aus dem DE-Gebrauchsmuster 69 43 625 bereits seit langem bekannt. Solche zumeist sehr stabil gehaltenen Konstruktionen müssen, insbesondere bei der Ankopplung von landwirtschaftlichen Anbaugeräten an Schleppern, enorme Kräfte übertragen und dementsprechend ausgelegt sein. Beispielsweise ist der zugehörige Steckbolzen bei der Befestigung eines Oberlenkers eines Dreipunktgestänges an dem Anbaubock eines Pfluges oder dergleichen vor allem einer beständig wechselnden Belastung unterworfen: der Oberlenker ist sowohl Zug- als auch Druckkräften ausgesetzt und belastet auch mit seinem eigenen Gewicht die den Steckbolzen gerade tragende Leibung der Ausnehmung in dem Maschinenteil und auch die Bohrung in dem Oberlenker selbst. Es kommt zu drehender Bewegung des Steckbolzens und zum Verschleiß in der Leibung und an der an dieser anliegenden zylindrischen Oberfläche des Steckbolzens, wenn diese sich relativ zueinander bewegen. Dieser Verschleiß kann in Grenzen gehalten werden, wenn unter Belastung stets die gleichen Flächen von Leibung und zylindrischer Oberfläche aneinander liegen und gleiten. Dementsprechend ist der Steckbolzen in der bekannten Steckbolzenverbindung nicht frei verdrehbar angeordnet, sondern durch das Halteteil drehfest an dem Maschinenteil befestigt.

Im Gegensatz zu dieser Ausführung werden Oberlenker zumeist mittels eines Langloches in dem Anbaubock angeschlossen. Wenn beispielsweise ein Pflug mit einer Regelhydraulik als Anbaugerät eingesetzt wird, dann kann der Steckbolzen an der Rückseite des Langloches anliegen, so daß Druck auf den Oberlenker ausgeübt wird, wenn sich das Anbaugerät abgesenkt in Arbeitsstellung befindet. Wird durch die Regelhydraulik das Anbaugerät (unter Umständen geringfügig) angehoben, dann fällt die bis dahin auftretende Druckkraft weg, und der Steckbolzen belastet die Rückseite des Langloches nicht mehr, ohne sofort dessen Vorderseite zu belasten; dies geschieht vielmehr erst, wenn der Steckbolzen durch das Langloch "gewandert" ist. Die Entlastung der Vorderachse des Schleppers und die Belastung seiner getriebenen Hinterachse erfolgen dadurch in Intervallen und damit schonender als bei der Anordnung einer kreiszylindrischen Ausnehmung, bei der die Druckbelastung des Oberlenkers sofort in eine Zugbelastung übergeht, wenn das Anbaugerät angehoben wird.

Das Langloch in dem Maschinenteil ist bei einem Pflug als Anbauteil auch deshalb vorteilhaft, weil dann, wenn dieser auf der Straße mit einem (hinteren) Transportrad bewegt wird, der Pflug vorn nur von den Unterlenkern getragen werden darf.

Die Erfindung hat sich deshalb die Aufgabe gestellt, eine Steckbolzenverbindung der eingangs näher bezeichneten Art so auszubilden, daß sie auch dann verdrehgesichert ist, wenn die Ausnehmung keine kreiszylindrische Bohrung ist.

Erfindungsgemäß wird die Aufgabe dadurch gelöst, daß die Ausnehmung des Maschinenteiles als Langloch ausgebildet ist und das Halteteil ebenfalls ein Langloch aufweist, das einen an dem Maschinenteil ortsfesten Führungszapfen übergreift und so lang ist, daß es gegen diesen in einem Umfang verschiebbar ist, der durch die mögliche Verschiebung des Steckbolzens in dem Maschinenteil vorgegeben ist.

Auf diese Weise gelingt es, das Drehen einer Steckbolzenverbindung im belasteten Zustand zu verhindern und dabei immer die gleichen Stellen des Steckbolzens zu belasten, trotzdem aber die Beweglichkeit des Steckbolzens in der als Langloch ausgeführten Durchführung zu gewährleisten, so daß die oben beschriebenen Vorteile eines Anschlusses beispielsweise eines Anbaugerätes an einen Schlepper mittels eines Langloches nicht verloren gehen.

In einfacher Weise kann der Führungszapfen mittels einer Bolzenschraube fixiert sein, die ihrerseits in einer kreiszylindrischen Bohrung des Maschinenteiles befestigt ist. Von solchen Bohrungen können mehrere zur Auswahl vorgesehen sein.

Das Halteteil ist vorteilhaft als flaches Blechteil oder als eine von einem Rundmaterial gebildete Öse ausgebildet.

Da der beispielsweise auf einem Anbaubock verfügbare Platz beschränkt ist, eventuell auch mehrere Langlöcher des Maschinenteils wahlweise verwendet werden, kann es besonders günstig sein, wenn die kreiszylindrische Bohrung des Maschinenteiles seitlich einer Längsseite des in dem Maschinenteil befindlichen Langloches vorgesehen ist. Es ist ganz offensichtlich nicht erforderlich, die beiden Langlöcher und die Bohrung in ganz bestimmter Lage einander zuzuordnen, um die Funktionstüchtigkeit der Steckverbindung zu gewährleisten.

Der Steckbolzen kann mit einem Handgriff versehen sein, der in Form einer an dem Steckbolzen befestigten Öse zweckmäßig ist. In einfacher Weise kann der Handgriff mit dem Halteteil einstückig ausgebildet sein.

Weitere Vorteile und die näheren Einzelheiten der Erfindung werden nachstehend anhand der Zeichnung an einem Ausführungsbeispiel näher erläutert. Es zeigen:
- Fig. 1: einen Anbaubock eines Anbaugerätes einer landwirtschaftlichen Maschine, der zur Befestigung an dem Dreipunktgestänge eines Schleppers eingerichtet ist, in räumlicher Sprengansicht,
- Fig. 2: eine Ansicht in Richtung A aus Fig. 1 in vereinfachter Darstellung,
- Fig. 3: eine Einzelheit B aus Fig. 2,
- Fig. 4: einen Schnitt I - I aus Fig. 3 und
- Fig. 5 und 6: je eine etwas veränderte Ausführung eines erfindungsgemäßen Steckbolzens.

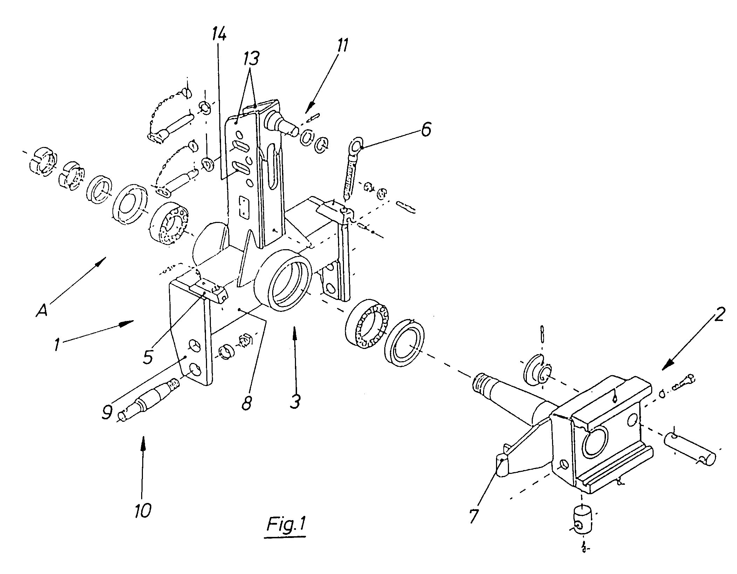

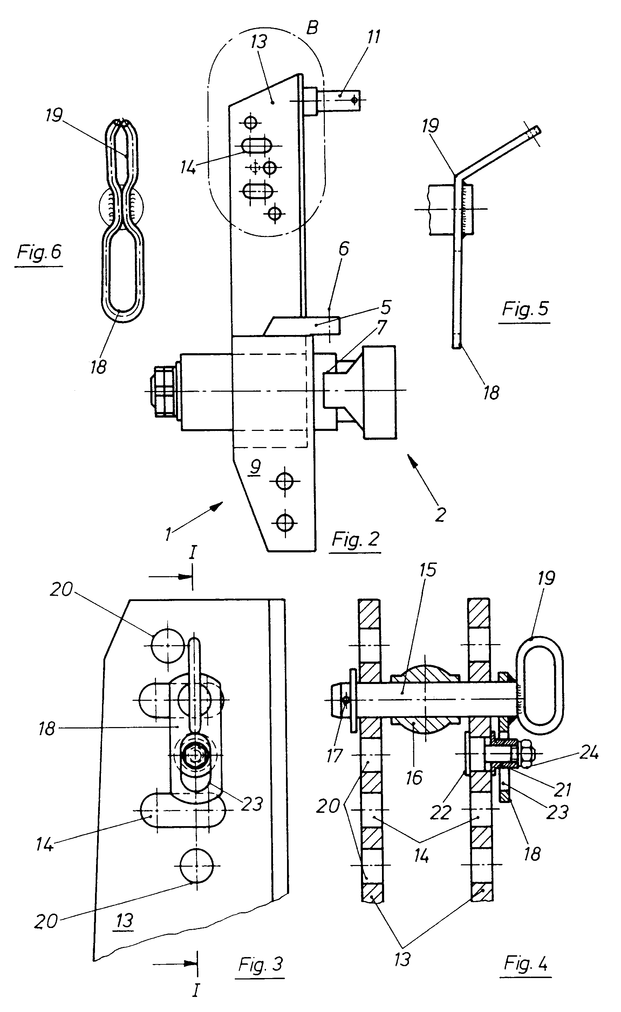

Ein Maschinenteil 1 gehört entsprechend Fig. 1 als Anbaubock zu dem Vordergestell eines Pfluges, dessen Pflugrahmen an einem Drehstück 2 befestigt ist, das mit einer in dem Maschinenteil 1 befestigten Drehlagerung 3 verbunden ist. In Konsolen 5 befinden sich Gewindespindeln 6, die in Fig. 2 durch eine strichpunktierte Linie nur symbolisch angedeutet sind, und mit denen die Verkantung des Pfluges einstellbar ist; das Drehstück 2 liegt deshalb mit seiner Fläche 7 an einer der Gewindespindeln 6 an. An einem Quergehäuse 8 sind Platten 9 vorgesehen, in denen Zapfen 10 für den Anschluß von in der Zeichnung weggelassenen Unterlenkern des Dreipunktgestänges fixiert sind. Schließlich ist ein Widerlager 11 erkennbar, an dem ein vom Schlepper betätigter, in der Zeichnung nicht dargestellter, Hydraulikzylinder angreift, mit dessen Hilfe der Pflugrahmen einschließlich der Pflugkörper schwenkbar ist. Schließlich sind in Fig. 1 und 2 in einem Steg 13 des Maschinenteiles 1 zwei Langlöcher 14 zu erkennen, von denen wahlweise eines zu der erfindungsgemäßen Steckbolzenverbindung gehört; die Langlöcher 14 befinden sich (Fig. 4) in beiden Stegen 13.

In den Fig. 3 und 4 sind die Einzelheiten dieser Steckbolzenverbindung, die in Fig. 1 und 2 nicht eingetragen sind, gut zu erkennen. Ein Steckbolzen 15 befindet sich in den oberen Langlöchern 14 und trägt zwischen den Stegen 13 das kraftübertragende Bauelement 16, nämlich den Oberlenker des Dreipunktgestänges, dessen geschnittenes Kugelgelenk allein sichtbar ist. Während der Steckbolzen 15 einerseits mit einer Splintsicherung 17 versehen ist, befindet sich an ihm andererseits ein Halteteil 18, das hier als flaches Blechteil ausgeführt und an dem Steckbolzen 15 angeschweißt ist, genauso wie ein ösenartiger Handgriff 19.

Zumindest in einem der Stege 13 sind mehrere kreiszylindrische Bohrungen 20 vorgesehen, von denen eine zur Befestigung eines Führungszapfens 21 mittels einer Bolzenschraube 22 benutzt ist. Der Führungszapfen 21 ist als Hülse ausgebildet, die auf dem glattzylindrischen Teil der Bolzenschraube 22 gelagert ist. Das Halteteil 18 übergreift mit einem Langloch 23 den Führungszapfen 21; dabei ist die Spannmutter 24 so dimensioniert, daß das Langloch 23 beim Abnehmen des Steckbolzens 15 über sie hinweggleiten kann, so daß das Halteteil 18 jederzeit aus dem Bereich des Führungszapfens 21 herausgeführt werden kann, ohne daß dieser gelöst werden müßte.

Anstelle eines ösenartigen Handgriffes 19 kann dieser auch als einfach aus dem Halteteil 18 abgebogenes und mit diesem einstückiges, flaches Blechteil entsprechend Fig. 5 ausgeführt sein. Schließlich kann ein solches kombiniertes Bauteil gemäß Fig. 6 genauso gut aus Rundmaterial gefertigt sein und einerseits ein ösenartiges Halteteil 18 und andererseits einen aus den Enden des Rundmaterials gebildeten Handgriff 19 umfassen.

Die Wirkungsweise der erfindungsgemäßen Steckbolzenverbindung ist aus der bisherigen Beschreibung ohne weiters zu erkennen und bedarf keiner gesonderten Darlegung. Der Steckbolzen 15 wird bei seiner Bewegung innerhalb der Langlöcher 14 durch das Halteteil 18 wie von einer Kulissenführung stets orientiert, so daß, wie oben ausführlich dargelegt, immer die gleichen Flächen der Leibung in den Langlöchern 14 an die gleichen Flächen auf dem Führungszapfen 21 anschlagen.

## Patentansprüche

1. Steckbolzenverbindung für die Verbindung eines Maschinenteiles (1), beispielsweise des Anbaubockes eines landwirtschaftlichen Anbaugerätes, mit einem kraftübertragenden Bauelement, beispielsweise dem Oberlenker eines Dreipunktgestänges bei Ackerschleppern, mit einem Steckbolzen (15), der in einer Bohrung des kraftübertragenden Bauelementes sowie in mindestens einer Ausnehmung des damit verbundenen Maschinenteiles (1) angeordnet ist, und mit einem Halteteil (18), das mit dem Steckbolzen (15) starr verbunden und an dem Maschinenteil (1) so arretiert ist, daß der Steckbolzen (15) im belasteten Zustand nicht verdrehbar ist, dadurch gekennzeichnet, daß die Ausnehmung des Maschinenteiles (1) als Langloch (14) ausgebildet ist und das Halteteil (18) ebenfalls ein Langloch (23) aufweist, das einen an dem Maschinenteil (1) ortsfesten Führungszapfen (21) übergreift und so lang ist, daß es gegen diesen in einem Umfang verschiebbar ist, der durch die mögliche Verschiebung des Steckbolzens (15) in dem Maschinenteil (1) vorgegeben ist.

2. Steckbolzenverbindung nach Anspruch 1, dadurch gekennzeichnet, daß der Führungszapfen (21) mittels einer Bolzenschraube (22) fixiert ist, die ihrerseits in einer kreiszylindrischen Bohrung (20) des Maschinenteiles (1) befestigt ist.

3. Steckbolzenverbindung nach Anspruch 1 oder 2, dadurch gekennzeichnet, daß das Halteteil (18) als flaches Blechteil ausgebildet ist.

4. Steckbolzenverbindung nach Anspruch 1 oder 2, dadurch gekennzeichnet, daß das Halteteil (18) als eine von einem Rundmaterial gebildete Öse ausgebildet ist.

5. Steckbolzenverbindung nach einem der Ansprüche 1 bis 4, dadurch gekennzeichnet, daß die kreiszylindrische Bohrung (20) des Maschinenteiles (1) seitlich einer Längsseite des in dem Maschinenteil (1) befindlichen Langloches (14) vorgesehen ist.

6. Steckbolzenverbindung nach einem der Ansprüche 1 bis 5, dadurch gekennzeichnet, daß der Steckbolzen (15) mit einem Handgriff (19) versehen ist.

7. Steckbolzenverbindung nach Anspruch 6, dadurch gekennzeichnet, daß der Handgriff (19) als Öse ausgebildet und an dem Steckbolzen (15) befestigt ist.

8. Steckbolzenverbindung nach Anspruch 6 und 7, dadurch gekennzeichnet, daß der Handgriff (19) mit dem Halteteil (18) einstückig ist.

## Claims

1. A socket-pin coupling for connecting a machine part (1), for example the mounting support of a mounted agricultural implement, to a force-transmitting structural member, for example the upper connecting rod of three-point linkage in tractors, comprising a socket pin (15) arranged in a bore of the force-transmitting structural member and in at least one recess in the machine part (1) connected thereto, and comprising a holding member (18) rigidly connected to the socket pin (15) and secured to the machine part (1) in such a manner that the socket pin (15) cannot twist in the loaded state, characterised in that the recess in the machine part (1) is formed as a slot (14) and the holding member (18) likewise has a slot (23) which engages over a guide pin (21) fixed to the machine part (1) and is of such a length that it is displaceable relative to the said guide pin (21) to an extent predetermined by the possible displacement of the socket pin (15) in the machine part (1).

2. A socket-pin coupling according to claim 1, characterised in that the guide pin (21) is fixed by means of a bolt screw (22) which is fastened in a circular cylindrical bore (20) of the machine part (1).

3. A socket-pin coupling according to claim 1 or 2, characterised in that the holding member (18) is formed as a flat sheet-metal part.

4. A socket-pin coupling according to claim 1 or 2, characterised in that the holding member (18) is constructed as an eye formed by a material round.

5. A socket-pin coupling according to any one of claims 1 to 4, characterised in that the circular cylindrical bore (20) of the machine part (1) is provided laterally of one longitudinal side of the slot (14) in the machine part (1).

6. A socket-pin coupling according to any one of claims 1 to 5, characterised in that the socket pin (15) is provided with a handle (19).

7. A socket-pin coupling according to claim 6, characterised in that the handle (19) is formed as an eye and is fixed to the socket pin (15).

8. A socket-pin coupling according to claims 6 and 7, characterised in that the handle (19) is integral with the holding member (18).

## Revendications

1. Liaison par axe embrochable, destinée à relier une pièce de machine (1), par exemple une chaise de raccordement d'un accessoire agricole adaptable, à un élément de construction transmettant les efforts, par exemple le bras supérieur d'un attelage à trois points dans le cas de tracteurs agricoles, comportant un axe embrochable (15), disposé dans un alésage de l'élément de construction transmettant les efforts, ainsi que dans au moins un évidement de la pièce de machine (1) raccordée à lui, et comportant une pièce de blocage (18), reliée de façon rigide à l'axe embrochable (15) et bloquée sur la pièce de machine (1) de façon à ne pas pouvoir tourner en charge,
caractérisée en ce que l'évidement de la pièce de machine (1) est réalisé sous la forme d'un trou allongé (14) et que la pièce de blocage (18) présente également un trou allongé (23), dans lequel s'engage un tourillon de guidage (21) solidaire de la pièce de machine (1), ce trou étant assez long pour permettre à la pièce de blocage de coulisser contre ce tourillon d'une quantité qui est prédéterminée par le coulissement possible de l'axe embrochable (15) dans la pièce de machine (1).

2. Liaison par axe embrochable suivant la revendication 1, caractérisé en ce que le tourillon de guidage (21) est fixé au moyen d'une vis de tourillon (22), qui, à son tour, est fixée dans un alésage cylindrique de révolution (20) de la pièce de machine (1).

3. Liaison par axe embrochable suivant la revendication 1 ou la revendication 2, caractérisée en ce que la pièce de blocage (18) est réalisée sous la forme d'une pièce plate en tôle.

4. Liaison par axe embrochable suivant la revendication 1 ou la revendication 2, caractérisée en ce que la pièce de blocage (18) est réalisée sous la forme d'un oeuillet constitué d'un matériau rond.

5. Liaison par axe embrochable suivant l'une des revendications 1 à 4, caractérisée en ce que l'alésage cylindrique circulaire (20) de la pièce de machine (1) est prévu sur le côté d'une des faces longitudinales du trou allongé (14) réalisé dans la pièce de machine (1).

6. Liaison par axe embrochable suivant l'une des revendications 1 à 5, caractérisée en ce que l'axe embrochable (15) est équipé d'une poignée (19).

7. Liaison par axe embrochable suivant la revendication 6, caractérisée en ce que la poignée (19) est réalisée sous la forme d'un oeuillet et est fixée sur l'axe embrochable (15).

8. Liaison par axe embrochable suivant la revendication 6 et la revendication 7, caractérisée en ce que la poignée (19) forme une seule pièce avec la pièce de blocage (18).
